# EUROPEAN PATENT SPECIFICATION

(11) **EP 4 447 764 B1**
(45) Date of publication and mention of the grant of the patent: **04.02.2026**
(21) Application number: 22840308.5
(22) Date of filing: 14.12.2022
(51) Int. Cl.: A47J 31/44, A47J 31/36, B65D 85/804

(54) **MACHINE FOR PREPARING AND EXTRACTING A HOT BEVERAGE**
MASCHINE ZUR ZUBEREITUNG UND EXTRAKTION EINES HEISSGETRÄNKS
MACHINE DE PRÉPARATION ET D'EXTRACTION D'UNE BOISSON CHAUDE

(30) Priority: 17.12.2021 IT 202100031652
(43) Date of publication of application: 23.10.2024
(73) Proprietor: Gise Caffé S.r.l., 40041 Gaggio Montano (IT)
(72) Inventor: ACCURSI, Giovanni, 40046 Alto Reno Terme (Bologna) (IT)
(74) Representative: Bianciardi, Ezio
(86) International application number: PCT/IB2022/062200
(87) International publication number: WO 2023/111885

(56) References cited:
- EP-A1- 2 452 893
- WO-A1-2012/010317
- WO-A1-2015/004551
- WO-A2-2014/016741

## Description

### Technical field

This invention relates to a machine for preparing and extracting a hot beverage.

### Background art

The machine according to the invention is of the type using single capsules, preferably of the single-dose type, from which the hot beverage is extracted (such as coffee, tea, milk, camomile and similar beverages) by extracting the product with pressurised hot fluid.

The capsules used for this type of machine basically comprise a capsule body forming a chamber having a bottom and an opening of the capsule body delimited by an annular collar protruding transversally with respect to the body.

A dose of extraction product is housed in the chamber.

The opening of the capsule is sealed by a piece of film adherent to the annular collar.

The prior art machines using these capsules basically comprise:
- a load-bearing frame having an inlet opening for the capsule;
- a first fixed extraction unit positioned in the load-bearing frame and comprising a housing for the capsule and means for perforating and passage of the mixture, to obtain the extraction of the beverage, positioned on the bottom of the housing;
- a second movable extraction unit, positioned inside the frame, and movable inside the frame along a linear trajectory, in both directions, between a first non-operating end position away from the first fixed extraction unit (wherein the second movable extraction unit is positioned close to the inlet opening), and a second operating end position wherein the second movable extraction unit is moved towards the first fixed extraction unit in such a way as to move the capsule from an inlet position in the frame to a housing position in the first fixed unit for extracting the beverage by feeding a pressurised hot fluid.

Means for supporting the capsule are interposed between the movable extraction unit and the frame.

Usually, these supporting means may comprise a pair of protruding arms, positioned on both sides of the movable extraction unit, configured to retain the capsule entering (by falling) from the opening present on the frame. The pair of arms is configured to move along the frame synchronised with the movable extraction unit. These arms can move between an operating position, with the ends of the arms positioned at a reciprocal reduced distance, for retaining the capsule (with the extraction unit movable in the first non-operating position), to a non-operating position, wherein the ends of the arms are at a mutual distance greater than the previous distance so as to free the capsule at the housing of the capsule in the fixed dispensing extraction unit (with the movable extraction unit in the second operating position).

The movable extraction unit has a head provided with perforating elements which are able to perforate, according to a first solution, the sheet of film (if the capsule is inserted in the frame with the bottom facing towards the fixed extraction unit) or, according to a second solution, the perforating elements perforate the bottom of the capsule (if the capsule is inserted in the frame in the opposite direction to the previous one).

The head of the movable extraction unit is provided with ducts for the passage of the pressurised hot fluid to be introduced into the capsule after the capsule has been perforated.

The extraction of the beverage occurs by the combination given by the increase in the pressure inside the capsule supplied by the fluid entering and by the presence of the perforating means positioned on the bottom of the housing of the first fixed extraction unit which allow an opening in the capsule to be obtained for the passage of the beverage obtained from the product/fluid mixture towards the dispensing conduits of the extracted beverage made in the first fixed extraction unit. The document WO 2015/004551 A1 disclosed a machine for preparing a hot beverage from a capsule.

Currently, the wide use of these machines for extracting beverages has consequently also led to a considerable increase in the production of capsules which can be used on these machines for the consumption of such beverages.

This increase in the production of the capsules has opened the way for a parallel production of "non-original" capsules or compatible capsules which have spread on the market as an alternative to the original capsules made specifically for each type of machine.

However, this type of compatible capsule product has drawbacks due to:
- low quality of the product contained in the capsules with consequent extracted beverage of reduced quality for the user;
- outer configuration of the capsule not always precise and matching the housing present in the fixed extraction unit which can lead to a partial or zero dispensing of the beverage, with possible damage also to the parts of the machine.

For this reason, the manufacturers of machines and relative capsules dedicated to their machines are seeking solutions, in particular on the machine, which are able to detect, before the extraction step, the originality of the capsule inserted in such a way as to block the machine before use of the machine in the case of the presence of a non-original capsule.

### Aim of the invention

The aim of this invention is to provide a machine for preparing and extracting a hot beverage that overcomes the above-mentioned drawbacks of the prior art.

More specifically, the aim of this invention is to provide a machine for preparing and extracting a hot beverage which is able to detect in real time the originality of the capsule before the step of extracting the beverage.

A further aim of the invention is to provide a machine for preparing and extracting a hot beverage with a detection system which is simple, practical and interacting safely with the capsule.

Said aims are fully achieved by the machine for preparing and extracting a hot beverage according to the invention as characterised in the appended claims.

### Brief description of the drawings

The main features of the invention will become more apparent from the following detailed description of a preferred, non-limiting embodiment, illustrated purely by way of example in the accompanying drawings, in which:
- Figure 1 is a perspective view, with some parts cut away to better illustrate others, of a machine for preparing and extracting a hot beverage according to the invention;
- Figure 2 is a top plan view of the machine of Figure 1;
- Figure 3 is a top plan view of the machine of Figure 2 in a first non-operating configuration, with some parts cut away and others in cross section;
- Figure 4 is a top plan view of the machine of Figure 2 in a second operating configuration, with some parts cut away and others in cross section;
- Figures 5 and 6 are, respectively, a front view and a perspective view from below of an example of a capsule which can be used in the machine of the above-mentioned drawings.

### Detailed description of preferred embodiments of the invention

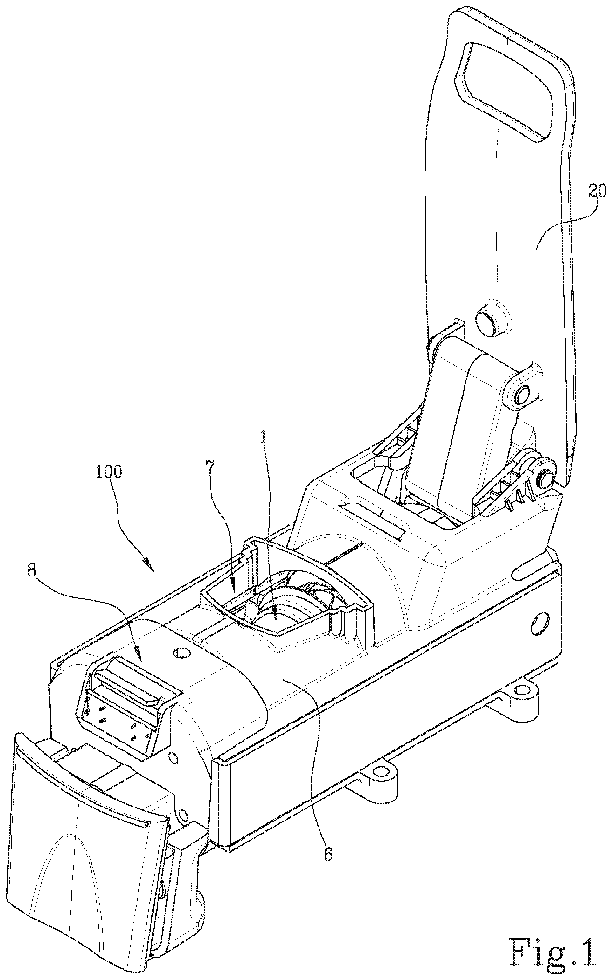

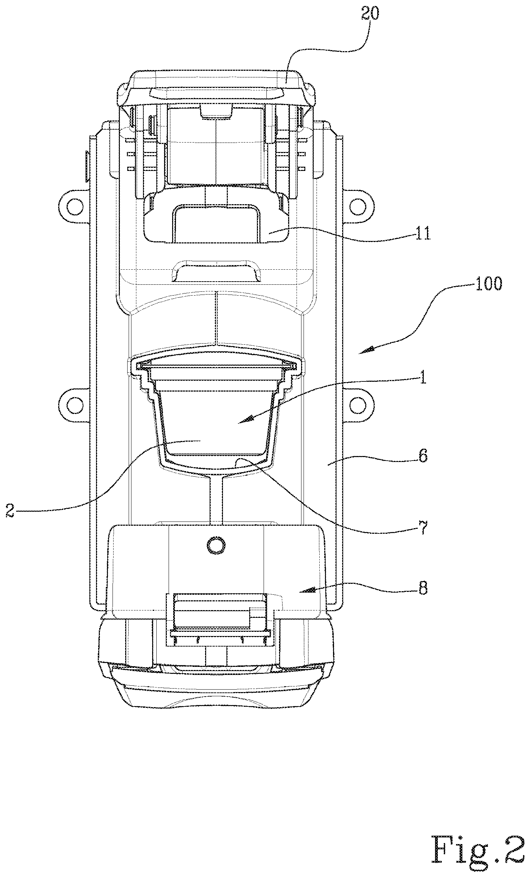

With reference to the accompanying drawings, in particular Figures 1 and 2, the machine according to the invention, labelled 100 in its entirety, is used with single capsules, preferably of the single-dose type, from which the hot beverage is extracted (such as coffee, tea, milk, camomile and similar beverages) by extracting the product with pressurised hot fluid. The capsule 1 which can be used in the machine 100 basically comprises a capsule body 2, forming a chamber, having a bottom 3 and an upper opening 4 delimited by an annular collar 5 protruding transversally relative to the capsule body 2.

A sheet for sealing the chamber (not illustrated) is positioned on the opening 4 and the collar 5.

The chamber houses at least one dose of product.

Figures 1 and 2 illustrate a part of the machine for preparing and extracting a hot beverage from the capsule 1, that is to say, the operating parts of relevance for the invention.

The machine 100 comprises a load-bearing frame 6 having an inlet opening 7 for the capsule 1.

Moreover, the machine 100 comprises a first fixed extraction unit 8 associated with the frame 6 and comprising a matching housing 9 for the capsule 1 and means 10 for perforating and passage of the mixture, to obtain the extraction of the beverage.

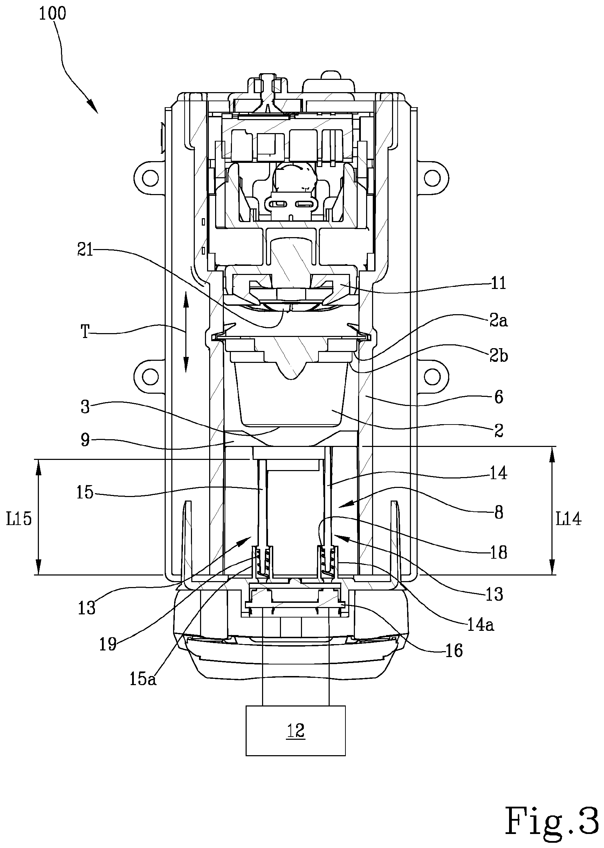

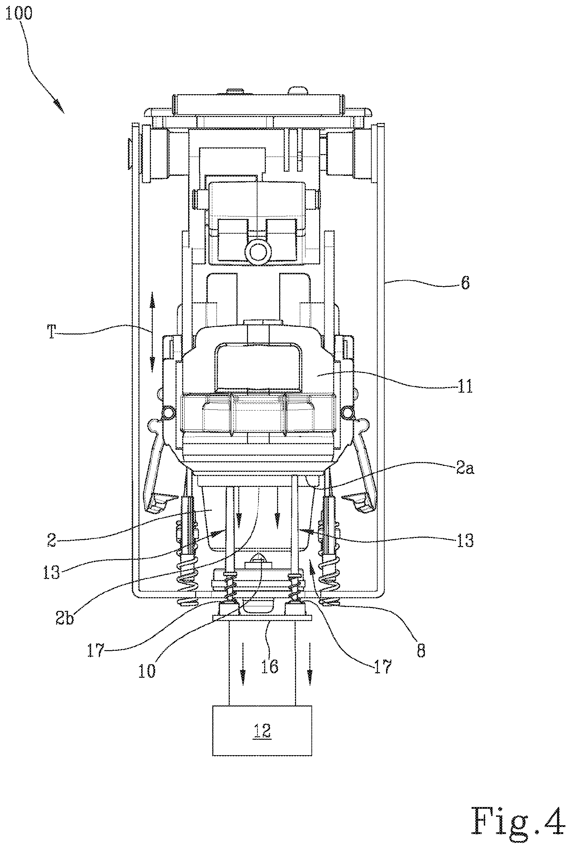

The machine 100 also comprises a second movable extraction unit 11, positioned inside the frame 6, and movable inside the frame 6 along a linear trajectory T, in both directions, between
- a first non-operating end position away from the first fixed extraction unit 8 (Figure 3), wherein the second movable extraction unit 11 is positioned close to the inlet opening 7, and
- a second operating end position (Figure 4) wherein the second movable extraction unit 11 is moved towards the first fixed extraction unit 8 in such a way as to move the capsule 1 from an inlet position to a position for insertion in the housing 9 of the first fixed unit 8 for extracting the beverage by feeding a pressurised hot fluid.

Moreover, the machine 100 comprises a command and control unit 12 configured for activating/deactivating the pressurised fluid for extracting the beverage (the unit is schematically illustrated with a block in Figures 3 and 4).

As illustrated (again see Figures 3 and 4), the machine 100 comprises a device 13 for detecting the capsule 1, positioned close to the first fixed extraction unit 8.

The device 13 for detecting the capsule 1 has at least two contact elements 14, 15 positioned on the first fixed extraction unit 8 and configured to intercept, at the insertion of the capsule body 2 in the housing 9 of the first extraction unit 8, a corresponding and different protruding outer surface 2a, 2b of contact of the capsule body 2.

In light of this, each contact element 14, 15 is slidable along the first extraction unit 8, parallel to the trajectory T, between a first advanced non-operating position, and a second withdrawn contact position, at the intercepting of the corresponding protruding surface 2a, 2b of contact of the capsule body 2 inserted in the housing 9.

The detection device 13 is connected to the command and control unit 12 and configured to send at least one corresponding enabling signal for activating the pressurised fluid by the command and control unit 12.

In other words, the machine has a system which is able to detect, before the extraction step and quickly and easily, whether the capsule inserted is the correct and original one and consequently give consent to the command and control unit to start the extraction procedure. Without this consent, the command and control unit 12 does not perform any type of activity on the machine.

It should be noted that the second movable extraction unit 11 is connected and controlled by an outer manual lever 20 which allows the second extraction unit 11 to be moved between the two non-operating and operating positions and vice versa.

The second movable extraction unit 11 is also provided with a unit 21 for perforating the capsule 1 to allow the flow of the pressurised hot fluid.

As illustrated,
the capsule 1 which can be used in the machine 100 comprises at least two different annular portions protruding from the capsule body 2 made at different distances from the bottom 3 of the capsule body 2 and in such a way as to define the two corresponding different outer contact surfaces 2a, 2b, positioned, in use, transversal to the linear trajectory (T), for the relative two contact elements 14, 15 configured to intercept the corresponding outer contact surface 2a, 2b.

It should be noted that the two contact elements 14, 15 are housed in a corresponding seat 14a, 15a made in the first fixed extraction unit 8 and slidable inside the corresponding seat 14a, 15a, parallel to the trajectory of movement T, between the first advanced non-operating position (see Figure 3), and the second withdrawn position, at the intercepting of the corresponding protruding surface 2a, 2b of contact of the capsule body 2 inserted in the housing 9.

In light of this, each contact element 14, 15 is always in contact with the corresponding protruding surface 2a, 2b during the passage between the first advanced non-operating position and the second withdrawn operating position.

Preferably, the two contact elements 14 and 15 are positioned on the fixed extraction unit 8, spaced from each other in such a way as to intercept the corresponding contact surfaces 2a and 2b at different points along the circumference of the capsule body 2.

It should be noted that each contact element 14 and 15 comprises a rod having a proximal operating end for intercepting the corresponding protruding outer surface 2a, 2b of contact of the capsule body 2.

This proximal end of each contact element 14 and 15 is positioned inside the housing 9 of the fixed extraction unit 8 even at the first operating position.

Each rod has a distal end positioned close to a foot 16 positioned in the fixed extraction unit 8 (at a relative end opposite the perforating zone of the capsule body).

Each foot 16 is equipped with a contact pushbutton 17 (for example, a microswitch) configured to send a respective enabling signal to the command and control unit 12 upon contact with the distal end of the corresponding contact element 14, 15 in the second withdrawn operating contact position.

As illustrated, the length L14 of the first contact element 14 is different to the length L15 of the second contact element 15.

This difference is necessary in the example illustrated, since the protruding contact surfaces 2a, 2b are positioned at different heights along the capsule body 2, but the ends of the elements 14 and 15 must come into contact simultaneously during the entrance of the capsule 1 into the housing 9.

Preferably, each contact element 14, 15 is provided with a spring 18, 19 positioned inside the seat 14a, 15a, fitted on each contact element 14, 15, and configured to maintain or restore each contact element 14, 15 in the first non-operating position.

More precisely, each rod forming one of the contact elements 14 or 15 has an annular contact protrusion for one end of the spring 18 or 19 also positioned inside the seat 14a or 15a.

In turn, the spring 18 or 19 comes into contact, at the other relative end, with a narrow surface of the seat 14a and 15a.

When the rod comes into contact with the protruding surface 2a or 2b of the capsule 1 entering the housing 9, the rod slides inside the seat 14a or 15a compressing the spring 18 or 19 up to the maximum withdrawn position wherein the distal end of the rod comes into contact with the pushbutton 17.

Subsequently, after completing the step of extracting the beverage, the capsule 1 is moved away from the housing 9 and the rods, due to the pushing action of the springs 18 or 19, return to their advanced non-operating position.

It should be noted that the frame 6 has an inlet opening 7 having a profile shaped to match the outer profile of the capsule 1.

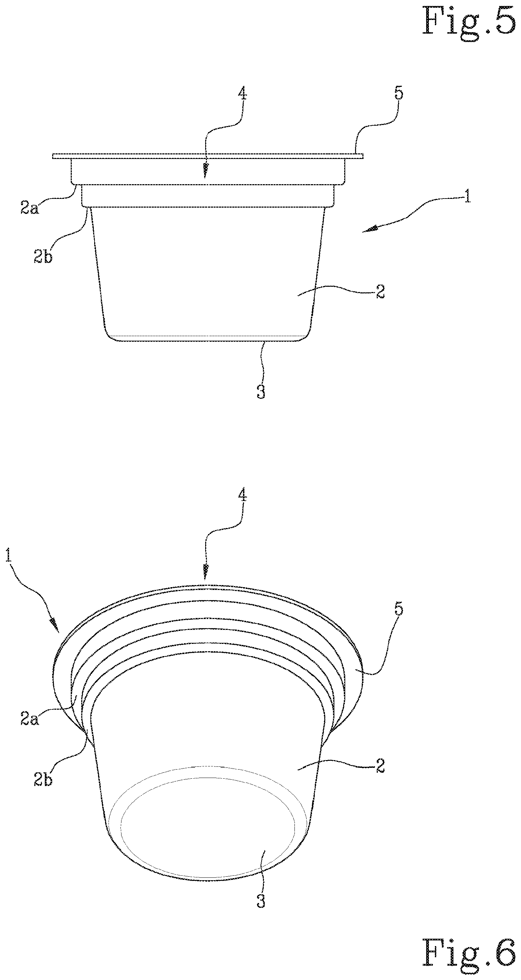

As illustrated in Figures 5 and 6, an example of a capsule 1 which can be used in the machine 100 described above comprises a capsule body 2 forming a chamber having a bottom 3 and an upper opening 4 delimited by an annular collar 5 protruding transversely relative to the capsule body 2 and on which a sheet for sealing the chamber is positioned. A dose of product is housed inside the chamber.

This capsule comprises the capsule body 2 having at least two annular portions protruding from the capsule body 2 at different distances from the bottom 3 of the capsule body 2 and in such a way as to define two different outer surfaces 2a, 2b parallel to the collar 5 (and at different heights with respect to the collar).

Preferably, the two annular portions extend along the entire circumference of the capsule body 2 in such a way as to define corresponding continuous annular outer surfaces 2a, 2b.

As mentioned above, the machine 100 has a command and control unit which, when the machine is switched on, is programmed in a standby state. After inserting the capsule 1 in the frame 3, the second movable unit 11 is activated in such a way as to allow the capsule 1 to enter the matching housing 9. If the capsule is of the correct or original type, the protruding surface(s) 2a and 2b are intercepted by the contact elements 14 and 15 which, under the thrust of the surfaces, withdraw along their corresponding seat in such a way as to come into contact with the pushbuttons 17.

The pushbuttons close a contact (preferably electrical) in such a way as to send an enabling signal to the control unit, which at that point can start, when requested by the user, the activation of the flow of the hot fluid under pressure towards the capsule.

If the capsule is not of the type which can be used in the machine, the contact elements cannot reach the pushbuttons and, consequently, the control unit remains in a blocked state and does not allow the activation of the flow of hot fluid.

The invention also provides a method for preparing and extracting a hot beverage from a capsule 1 comprising a capsule body 2 forming a chamber having a bottom 3 and an upper opening 4 delimited by an annular collar 5 protruding transversely relative to the capsule body 2 on which a sheet for sealing the chamber is positioned and where a dose of product is housed in the chamber.

The method comprises the steps of:
- inserting the capsule 2 in an inlet opening 7 of a machine 100 for preparing and extracting the hot beverage from the capsule 1 and at a second movable extraction unit 11 positioned in a first non-operating end position;
- moving the second movable unit 11 with the capsule 1, along a linear trajectory T, towards a first fixed extraction unit 8 having a matching housing 9 for the capsule 1 and means 10 for perforating and passage of the mixture, to obtain the extraction of the beverage;
- locking the capsule inside the housing 9;
- extracting the beverage from the capsule 1 by feeding a hot fluid under pressure.

During the steps of approaching and locking the capsule 1 in the housing 9 there are the steps of:
- intercepting and contacting, using at least two contact elements 14, 15 present on the first extraction unit 8 of a corresponding and different protruding outer surface 2a, 2b of contact of the capsule body 2;
- sliding (withdrawing) each contact element 14, 15 along the first extraction unit 8, parallel to the trajectory T, between a first advanced non-operating position, and a second withdrawn position of constant contact with the corresponding protruding surface 2a, 2b of contact of the capsule body 2 during insertion in the housing 9;
- activating the extraction of the hot beverage only when a corresponding signal for allowing activation of the pressurised fluid by the two contact elements 14, 15 is sent.

The preset aims are achieved with a machine structured in this way thanks to a detection device which is extremely simple, but effective and precise and which makes it possible to use the machine only with the capsules decided by the machine manufacturer.

The components of the detection device are reduced to the essential minimum and do not increase the overall dimensions of the machine.

The presence of the two contact elements makes it possible to increase the safety of the dispensing, since if the capsule is not correctly centred in the housing, the two contact elements do not give consent to the start of the dispensing. This is possible thanks to the fact that the two contact surfaces are linear, whilst it would be more difficult on, for example, tapered surfaces, which are usually the case for the capsule bodies used in these machines.

## Claims

1. A machine for preparing and extracting a hot beverage from a capsule (1) comprising a capsule body (2) forming a chamber having a bottom (3) and an upper opening (4) delimited by an annular collar (5) protruding transversely relative to the capsule body (2) on which a sheet for sealing the chamber is positioned; a dose of product being housed in said chamber; the machine (100) comprising:
- a load-bearing frame (6) having an inlet opening (7) for the capsule (1);
- a first fixed extraction unit (8) associated with the frame (6) and comprising a matching housing (9) for the capsule (1) and means (10) for perforating and passage of the mixture, to obtain the extraction of the beverage;
- a second movable extraction unit (11), positioned inside the frame (6), and movable inside the frame (6) along a linear trajectory (T), in both directions, between a first non-operating end position away from the first fixed extraction unit (8), wherein the second movable extraction unit (11) is positioned close to the inlet opening (7), and a second operating end position wherein the second movable extraction unit (11) is moved towards the first fixed extraction unit (8) in such a way as to move the capsule (1) from an inlet position to a position for insertion in the housing (9) of the first fixed unit (8) for extracting the beverage by feeding a pressurised hot fluid;
- a command and control unit (12) configured to activate/deactivate the pressurised fluid for extracting the beverage,
**characterised in that** it comprises a device (13) for detecting the capsule (1) having:
- at least two contact elements (14, 15) positioned on the first fixed extraction unit (8) and configured to intercept, at the insertion of the capsule body (2) in the housing (9) of the first extraction unit (8), a corresponding and different protruding outer surface (2a, 2b) of contact of the capsule body (2); each contact element (14, 15) being slidable along the first extraction unit (8), parallel to the trajectory (T), between a first advanced non-operating position, and a second withdrawn contact position, at the intercepting of the corresponding protruding surface (2a, 2b) of contact of the capsule body (2) inserted in the housing (9);
the detection device (13) being connected to the control unit (12) and configured to send at least one corresponding enabling signal for activating the pressurised fluid by the control unit (12).

2. The machine according to claim 1, wherein the capsule (1) comprises at least two different annular portions protruding from the capsule body (2) and made at different distances from the bottom (3) of the capsule body (2) and in such a way as to define the two corresponding different outer contact surfaces (2a, 2b), positioned, in use, transversal to the linear trajectory (T), for the relative two contact elements (14, 15) configured to intercept a corresponding outer contact surface (2a, 2b).

3. The machine according to claim 1 or 2, wherein the two contact elements (14, 15) are housed in a corresponding seat (14a, 15a) made in the first fixed extraction unit (8) and slidable inside the corresponding seat (14a, 15a), parallel to the trajectory (T) of movement between the first advanced non-operating position and the second withdrawn position, at the intercepting of the corresponding protruding surface (2a, 2b) of contact of the capsule body (2) inserted in the housing (9); each contact element (14, 15) between the first advanced non-operating position and the second withdrawn position being always in contact with the corresponding protruding surface (2a, 2b).

4. The machine according to any one of the preceding claims, wherein each contact element (14, 15) comprises a rod having a proximal operating end for intercepting the corresponding protruding outer surface (2a, 2b) of contact of the capsule body (2) and positioned inside the housing (9) of the fixed extraction unit (8); each rod having a distal end positioned close to a foot (16) located in the fixed extraction unit (8); said foot (16) being provided with a contact pushbutton (17) configured to send a respective enabling signal to the command and control unit (12) upon contact with the distal end of the corresponding contact element (14, 15) in said second withdrawn operating contact position.

5. The machine according to any one of the preceding claims, wherein a first contact element (14) has a length (L14) which is different from the length (L15) of the second contact element (15).

6. The machine according to any one of the preceding claims, wherein each contact element (14, 15) is provided with a spring (18, 19) positioned inside the seat (14a, 15a), fitted on each contact element (14, 15), and configured to maintain or restore each contact element (14, 15) in the first non-operating position.

7. The machine according to any one of the preceding claims, wherein the frame (6) has an inlet opening(7) having a profile shaped to match the outer profile of the capsule (1).

8. A method for preparing and extracting a hot beverage from a capsule (1) comprising a capsule body (2) forming a chamber having a bottom (3) and an upper opening (4) delimited by an annular collar (5) protruding transversely relative to the capsule body (2) on which a sheet for sealing the chamber is positioned; a dose of product being housed in said chamber;
the method comprising the steps of:
- inserting the capsule (2) in an inlet opening (7) of a machine (100) for preparing and extracting the hot beverage from the capsule (1) and at a second movable extraction unit (11) positioned in a first non-operating end position;
- moving the second movable unit (11) with the capsule (2), along a linear trajectory (T), towards a first fixed extraction unit (8) having a matching housing (9) for the capsule (1) and means (10) for perforating and passage of the mixture, to obtain the extraction of the beverage;
- locking the capsule inside the housing (9);
- extracting the beverage from the capsule (2) by feeding a hot fluid under pressure;
**characterised in that** during the steps of moving the capsule (2) towards and locking the capsule in the housing (9) there are the steps of:
- intercepting and contacting, using at least two contact elements (14, 15) present on the first unit (8), for extracting a corresponding and different protruding outer surface (2a, 2b) of contact of the capsule body (2);
- sliding each contact element (14, 15) along the first extraction unit (8), parallel to the trajectory (T), between a first advanced non-operating position, and a second withdrawn position of constant contact with the corresponding protruding surface (2a, 2b) of contact of the capsule body (2) during insertion in the housing (9);
- activating the extraction of the hot beverage only when a corresponding signal for allowing activation of the pressurised fluid by the two contact elements (14, 15) is sent.

## Patentansprüche

1. Maschine zur Zubereitung und Extraktion eines Heißgetränks aus einer Kapsel (1), umfassend einen Kapselkörper (2), formend eine Kammer, aufweisend einen Boden (3) und eine obere Öffnung (4), begrenzt durch einen ringförmigen Bund (5), der quer relativ zu dem Kapselkörper (2) hervorsteht, auf dem eine Folie zum Versiegeln der Kammer positioniert ist, wobei eine Produktdosis in der Kammer untergebracht ist, wobei die Maschine (100) Folgendes umfasst:
- einen lasttragenden Rahmen (6), aufweisend eine Einlassöffnung (7) für die Kapsel (1);
- eine erste fixe Extraktionseinheit (8), die mit dem Rahmen (6) assoziiert ist und eine passende Einhausung (9) für die Kapsel (1) sowie Mittel (10) zum Perforieren und für den Durchgang der Mischung umfasst, um die Extraktion des Getränks zu erhalten;
- eine zweite bewegbare Extraktionseinheit (11), die innerhalb des Rahmens (6) positioniert und innerhalb des Rahmens (6) entlang einer linearen Bahn (T) in beide Richtungen zwischen einer ersten Nichtbetriebsendposition entfernt von der ersten fixen Extraktionseinheit (8), in der die zweite bewegbare Extraktionseinheit (11) nah an der Einlassöffnung (7) positioniert ist, und einer zweiten Betriebsendposition, in der die zweite bewegbare Extraktionseinheit (11) hinführend zu der ersten fixen Extraktionseinheit (8) derart bewegt wird, dass die Kapsel (1) von einer Einlassposition zu einer Position zum Einfügen in die Einhausung (9) der ersten fixen Einheit (8) zum Extrahieren des Getränks durch Zuführen eines mit Druck beaufschlagten heißen Fluids bewegt wird, bewegbar ist;
- eine Befehls- und Steuereinheit (12), die ausgelegt ist, um das mit Druck beaufschlagte Fluid zum Extrahieren des Getränks zu aktivieren/deaktivieren,
**dadurch gekennzeichnet, dass** sie eine Vorrichtung (13) zum Erkennen der Kapsel (1) umfasst, die Folgendes aufweist:
- mindestens zwei Kontaktelemente (14, 15), die auf der ersten fixen Extraktionseinheit (8) positioniert und ausgelegt sind, um beim Einfügen des Kapselkörpers (2) in die Einhausung (9) der ersten Extraktionseinheit (8) eine entsprechende und unterschiedliche hervorstehende äußere Kontaktoberfläche (2a, 2b) des Kapselkörpers (2) abzufangen, wobei ein jedes Kontaktelement (14, 15) entlang der ersten Extraktionseinheit (8) parallel zur Bahn (T) zwischen einer ersten vorgeschobenen Nichtbetriebsposition und einer zweiten zurückgezogenen Kontaktposition beim Abfangen der entsprechenden hervorstehenden Kontaktoberfläche (2a, 2b) des in die Einhausung (9) eingefügten Kapselkörpers (2) verschiebbar ist,
wobei die Erkennungsvorrichtung (13) mit der Steuereinheit (12) verbunden und ausgelegt ist, um mindestens ein entsprechendes Freigabesignal zum Aktivieren des mit Druck beaufschlagten Fluids durch die Steuereinheit (12) zu senden.

2. Maschine nach Anspruch 1, wobei die Kapsel (1) mindestens zwei unterschiedliche ringförmige Abschnitte umfasst, die aus dem Kapselkörper (2) hervorstehen und in unterschiedlichen Abständen von dem Boden (3) des Kapselkörpers (2) derart ausgebildet sind, dass sie die beiden entsprechenden unterschiedlichen äußeren Kontaktoberflächen (2a, 2b) definieren, die bei Gebrauch quer zur linearen Bahn (T) für die jeweiligen beiden Kontaktelemente (14, 15) positioniert sind, die ausgelegt sind, um eine entsprechende äußere Kontaktoberfläche (2a, 2b) abzufangen.

3. Maschine nach Anspruch 1 oder 2, wobei die beiden Kontaktelemente (14, 15) in einem entsprechenden Sitz (14a, 15a) untergebracht sind, der in der ersten fixen Extraktionseinheit (8) ausgebildet ist, und innerhalb des entsprechenden Sitzes (14a, 15a) parallel zur Bewegungsbahn (T) zwischen der ersten vorgeschobenen Nichtbetriebsposition und der zweiten zurückgezogenen Position beim Abfangen der entsprechenden hervorstehenden Kontaktoberfläche (2a, 2b) des in die Einhausung (9) eingefügten Kapselkörpers (2) verschiebbar sind, wobei ein jedes Kontaktelement (14, 15) zwischen der ersten vorgeschobenen Nichtbetriebsposition und der zweiten zurückgezogenen Position stets mit der entsprechenden hervorstehenden Oberfläche (2a, 2b) in Kontakt ist.

4. Maschine nach einem der vorhergehenden Ansprüche, wobei ein jedes Kontaktelement (14, 15) einen Stab umfasst, aufweisend ein proximales Betriebsende zum Abfangen der entsprechenden hervorstehenden äußeren Kontaktoberfläche (2a, 2b) des Kapselkörpers (2), und innerhalb der Einhausung (9) der fixen Extraktionseinheit (8) positioniert ist, wobei ein jeder Stab ein distales Ende aufweist, das in der Nähe eines Fußes (16) positioniert ist, der in der fixen Extraktionseinheit (8) befindlich ist, wobei der Fuß (16) mit einem Kontaktdruckknopf (17) versehen ist, der ausgelegt ist, um der Befehls- und Steuereinheit (12) bei Kontakt mit dem distalen Ende des entsprechenden Kontaktelements (14, 15) in der zweiten zurückgezogenen Betriebskontaktposition ein jeweiliges Freigabesignal zu senden.

5. Maschine nach einem der vorhergehenden Ansprüche, wobei ein erstes Kontaktelement (14) eine Länge (L14) aufweist, die sich von der Länge (L15) des zweiten Kontaktelements (15) unterscheidet.

6. Maschine nach einem der vorhergehenden Ansprüche, wobei ein jedes Kontaktelement (14, 15) mit einer Feder (18, 19) versehen ist, die innerhalb des Sitzes (14a, 15a) positioniert und auf einem jeden Kontaktelement (14, 15) befestigt und ausgelegt ist, um ein jedes Kontaktelement (14, 15) in der ersten Nichtbetriebsposition beizubehalten oder in diese zurückzuführen.

7. Maschine nach einem der vorhergehenden Ansprüche, wobei der Rahmen (6) eine Einlassöffnung (7) aufweist, die ein Profil aufweist, das passend zum äußeren Profil der Kapsel (1) ausgeformt ist.

8. Verfahren zur Zubereitung und Extraktion eines Heißgetränks aus einer Kapsel (1), umfassend einen Kapselkörper (2), formend eine Kammer, aufweisend einen Boden (3) und eine obere Öffnung (4), begrenzt durch einen ringförmigen Bund (5), der quer relativ zu dem Kapselkörper (2) hervorsteht, auf dem eine Folie zum Versiegeln der Kammer positioniert ist, wobei eine Produktdosis in der Kammer untergebracht ist,
wobei das Verfahren die folgenden Schritte umfasst:
- Einfügen der Kapsel (2) in eine Einlassöffnung (7) einer Maschine (100) zur Zubereitung und Extraktion des Heißgetränks aus der Kapsel (1) und an einer zweiten bewegbaren Extraktionseinheit (11), die in einer ersten Nichtbetriebsendposition positioniert ist;
- Bewegen der zweiten bewegbaren Einheit (11) mit der Kapsel (2) entlang einer linearen Bahn (T) hinführend zu einer ersten fixen Extraktionseinheit (8), aufweisend eine passende Einhausung (9) für die Kapsel (1) und Mittel (10) zum Perforieren und für den Durchgang der Mischung, um die Extraktion des Getränks zu erhalten;
- Festspannen der Kapsel innerhalb der Einhausung (9);
- Extrahieren des Getränks aus der Kapsel (2) durch Zuführen eines heißen Fluids unter Druck,
**dadurch gekennzeichnet, dass** während der Schritte zum Bewegen der Kapsel (2) hinführend zur Einhausung (9) und zum Festspannen der Kapsel darin die folgenden Schritte vollzogen werden:
- Abfangen und Berühren einer entsprechenden und unterschiedlichen hervorstehenden äußeren Kontaktoberfläche (2a, 2b) des Kapselkörpers (2) unter Nutzung von mindestens zwei Kontaktelementen (14, 15), die auf der ersten Einheit (8) zum Extrahieren bereitgestellt sind;
- Verschieben eines jeden Kontaktelements (14, 15) entlang der ersten Extraktionseinheit (8) parallel zur Bahn (T) zwischen einer ersten vorgeschobenen Nichtbetriebsposition und einer zweiten zurückgezogenen Position des ständigen Kontakts mit der entsprechenden hervorstehenden Kontaktoberfläche (2a, 2b) des Kapselkörpers (2) während des Einfügens in die Einhausung (9);
- Aktivieren der Extraktion des Heißgetränks nur dann, wenn ein entsprechendes Signal zur Freigabe der Aktivierung des mit Druck beaufschlagten Fluids durch die beiden Kontaktelemente (14, 15) gesendet wird.

## Revendications

1. Machine de préparation et d'extraction d'une boisson chaude à partir d'une capsule (1) comprenant un corps de capsule (2) formant une chambre ayant un fond (3) et une ouverture supérieure (4) délimitée par un collier annulaire (5) faisant saillie transversalement par rapport au corps de capsule (2) sur lequel est positionnée une feuille de scellement de la chambre ; une dose de produit étant logée dans ladite chambre ; la machine (100) comprenant :
- un cadre porteur (6) ayant une ouverture d'entrée (7) pour la capsule (1) ;
- une première unité d'extraction fixe (8) associée au cadre (6) et comprenant un logement (9) adapté pour la capsule (1) et des moyens (10) de perforation et de passage du mélange, pour obtenir l'extraction de la boisson ;
- une seconde unité d'extraction mobile (11), positionnée à l'intérieur du cadre (6), et mobile à l'intérieur du cadre (6) le long d'une trajectoire linéaire (T), dans les deux directions, entre une première position d'extrémité de non-fonctionnement éloignée de la première unité d'extraction fixe (8), dans laquelle la seconde unité d'extraction mobile (11) est positionnée à proximité de l'ouverture d'entrée (7), et une seconde position d'extrémité de fonctionnement, dans laquelle la seconde unité d'extraction mobile (11) est déplacée vers la première unité d'extraction fixe (8) de manière à déplacer la capsule (1) d'une position d'entrée à une position d'insertion dans le logement (9) de la première unité fixe (8) d'extraction de la boisson en alimentant un fluide chaud sous pression ;
- une unité de commande et de contrôle (12) configurée pour activer/désactiver le fluide sous pression d'extraction de la boisson,
**caractérisée en ce qu'**elle comprend un dispositif (13) de détection de la capsule (1) ayant :
- au moins deux éléments de contact (14, 15) positionnés sur la première unité d'extraction fixe (8) et configurés pour intercepter, lors de l'insertion du corps de capsule (2) dans le logement (9) de la première unité d'extraction (8), une surface extérieure saillante correspondante et différente (2a, 2b) de contact du corps de capsule (2) ; chaque élément de contact (14, 15) pouvant coulisser le long de la première unité d'extraction (8), parallèlement à la trajectoire (T), entre une première position avancée de non-fonctionnement, et une seconde position retirée de contact, lors de l'interception de la surface saillante correspondante (2a, 2b) de contact du corps de capsule (2) inséré dans le logement (9) ;
le dispositif de détection (13) étant relié à l'unité de commande (12) et configuré pour envoyer au moins un signal d'autorisation correspondant d'activation du fluide sous pression par l'unité de contrôle (12).

2. Machine selon la revendication 1, dans laquelle la capsule (1) comprend au moins deux portions annulaires différentes faisant saillie à partir du corps de capsule (2) et réalisées à des distances différentes à partir du fond (3) du corps de capsule (2) et de manière à définir les deux surfaces de contact extérieures différentes correspondantes (2a, 2b), positionnées, en utilisation, transversalement à la trajectoire linéaire (T), pour les deux éléments de contact relatifs (14, 15) configurés pour intercepter une surface de contact extérieure correspondante (2a, 2b).

3. Machine selon la revendication 1 ou 2, dans laquelle les deux éléments de contact (14, 15) sont logés dans un siège correspondant (14a, 15a) réalisé dans la première unité d'extraction fixe (8) et pouvant coulisser à l'intérieur du siège (14a, 15a) correspondant, parallèlement à la trajectoire (T) de mouvement entre la première position avancée de non-fonctionnement et la seconde position retirée, à l'interception de la surface saillante correspondante (2a, 2b) de contact du corps de capsule (2) inséré dans le logement (9) ; chaque élément de contact (14, 15) entre la première position avancée de non-fonctionnement et la seconde position retirée étant toujours en contact avec la surface saillante correspondante (2a, 2b).

4. Machine selon l'une quelconque des revendications précédentes, dans laquelle chaque élément de contact (14, 15) comprend une tige ayant une extrémité de fonctionnement proximale d'interception de la surface extérieure saillante correspondante (2a, 2b) de contact du corps de capsule (2) et positionnée à l'intérieur du logement (9) de l'unité d'extraction fixe (8) ; chaque tige ayant une extrémité distale positionnée à proximité d'un pied (16) situé dans l'unité d'extraction fixe (8) ; ledit pied (16) étant pourvu d'un bouton-poussoir de contact (17) configuré pour envoyer un signal d'autorisation respectif à l'unité de commande et de contrôle (12) lors du contact avec l'extrémité distale de l'élément de contact correspondant (14, 15) dans ladite seconde position de contact de fonctionnement retirée.

5. Machine selon l'une quelconque des revendications précédentes, dans laquelle un premier élément de contact (14) a une longueur (L14) qui est différente de la longueur (L15) du second élément de contact (15).

6. Machine selon l'une quelconque des revendications précédentes, dans laquelle chaque élément de contact (14, 15) est pourvu d'un ressort (18, 19) positionné à l'intérieur du siège (14a, 15a), ajusté sur chaque élément de contact (14, 15), et configuré pour maintenir ou rétablir chaque élément de contact (14, 15) dans la première position de non-fonctionnement.

7. Machine selon l'une quelconque des revendications précédentes, dans laquelle le cadre (6) a une ouverture d'entrée (7) ayant un profil formé pour correspondre au profil extérieur de la capsule (1).

8. Procédé de préparation et d'extraction d'une boisson chaude à partir d'une capsule (1) comprenant un corps de capsule (2) formant une chambre ayant un fond (3) et une ouverture supérieure (4) délimitée par un collier annulaire (5) faisant saillie transversalement par rapport au corps de capsule (2) sur lequel est positionnée une feuille de scellement de la chambre ; une dose de produit étant logée dans ladite chambre ; le procédé comprenant les étapes de :
- insérer la capsule (2) dans une ouverture d'entrée (7) d'une machine (100) de préparation et d'extraction de la boisson chaude à partir de la capsule (1) et au niveau d'une seconde unité d'extraction mobile (11) positionnée dans une première position d'extrémité de non-fonctionnement ;
- déplacer la seconde unité mobile (11) avec la capsule (2), le long d'une trajectoire linéaire (T), vers une première unité d'extraction fixe (8) ayant un logement (9) adapté pour la capsule (1) et des moyens (10) de perforation et de passage du mélange, pour obtenir l'extraction de la boisson ;
- verrouiller la capsule à l'intérieur du logement (9) ;
- extraire la boisson à partir de la capsule (2) en alimentant un fluide chaud sous pression ;
**caractérisé en ce que** pendant les étapes de déplacer la capsule (2) vers et de verrouiller la capsule dans le logement (9), il y a les étapes de :
- intercepter et mettre en contact, en utilisant au moins deux éléments de contact (14, 15) présents sur la première unité (8) d'extraction, une surface extérieure saillante correspondante et différente (2a, 2b) de contact du corps de capsule (2) ;
- faire glisser chaque élément de contact (14, 15) le long de la première unité d'extraction (8), parallèlement à la trajectoire (T), entre une première position avancée de non-fonctionnement, et une seconde position retirée de contact constant avec la surface saillante correspondante (2a, 2b) de contact du corps de capsule (2) lors de l'insertion dans le logement (9) ;
- activer l'extraction de la boisson chaude uniquement lorsqu'un signal correspondant d'autorisation de l'activation du fluide sous pression par les deux éléments de contact (14, 15) est envoyé.
